# EUROPEAN PATENT APPLICATION

(11) **EP 4 570 880 A1**
(43) Date of publication of application: **18.06.2025**
(21) Application number: 23216043.2
(22) Date of filing: 12.12.2023
(51) Int. Cl.: C09K 21/04, B32B 17/06

(54) **FIRE PROTECTION GELS, IN PARTICULAR FOR GLAZING APPLICATIONS**

(71) Applicant: Chemetall GmbH, 60487 Frankfurt (DE); RWTH Aachen, 52056 Aachen (DE)
(72) Inventor: KASPER, Christoph, 60487 Frankfurt (DE); GOEBGEN, Kai, 60487 Frankfurt (DE)
(74) Representative: Steffan & Kiehne Patentanwälte PartG mbB

(57) **Abstract**

The present invention relates to a hydrogel obtainable by a method comprising at least three steps, namely reacting, in an aqueous medium, at least one constituent a1) comprising at least one phosphorous containing functional group with at least one constituent a2) comprising at least one amino group that it is reactive towards the at least one phosphorous containing functional group of constituent a1) to form a phosphorous containing intermediate product IP1 (step 1)), adding at least one of at least one kind of (i) aluminum oxide hydroxide particles at least one kind of (ii) aluminum oxide particles, and at least one kind of (iii) at least one aluminum containing precursor for generating the at least one kind of particles (i) and/or (ii) as constituent a3) to the aqueous mixture containing the intermediate product IP1 to form a phosphorous and aluminum containing intermediate product IP2 (step 2)), and curing the aqueous mixture containing the intermediate product IP2 obtainable after having performed step 2) to form the hydrogel (step 3)), a method for its preparation, a use thereof as fireproofing gel and/or for fire protection, in particular in glazing applications, and to a substrate having at least one surface, onto which the inventive hydrogel has been at least partially applied.

## Description

The present invention relates to a hydrogel, a method for its preparation, a use thereof as fireproofing gel and/or for fire protection, in particular in glazing applications, and to a substrate having at least one surface, onto which the inventive hydrogel has been at least partially applied.

### Background of the invention

The use of gels such as hydrated gels as intermediate layers in glazing applications such as in laminated glass constructions or in panels for fire-resistant construction is known in the prior art, in view of the necessity of compliance with fire-resistance requirements.

EP 0 527 401 A2 and EP 0 616 021 A1 both disclose fireproofing gels based on amine salts of acid phosphates comprising an aluminum component, a phosphorus component, and an amine component. The gels are obtained by preparing an aqueous aluminum dihydrogen phosphate (Al(H₂PO₄)₃) solution from phosphoric acid and aluminum hydroxide first, to which an amine component such as ethanolamine is added. In the production process disclosed in these two prior art references, the addition of the amine to the Al(H₂PO₄)₃ solution is the last step to obtain a gellable solution. This step is strongly exothermic and hence, substantial cooling is required to prevent premature gelation. Further, the gellable solution obtained has a comparatively high viscosity, which is a disadvantage when filling inter-pane spaces for glazing applications, in particular in order to achieve a blister-free filling. In addition, when using the gels of the prior art in case of a fire, it is an additional disadvantage that they often melt already at comparably low temperatures and in particular significantly before they start forming an insulating foam. Particularly in the temperature range of 100 to 300 °C, the viscosity of these gels often drops sharply, so that thicker layers can run down the glass pane.

EP 0 596 324 A1 and EP 0 596 322 A1 also both disclose fireproofing gels based on amine salts of acid phosphates comprising an aluminum component, a phosphorus component, and an amine component. However, as amine component a reaction product of boric acid and an alkanolamine such as ethanolamine is used. In the production process disclosed in these two prior art references, the addition of the reaction product of boric acid and an alkanolamine to the Al(H₂PO₄)₃ solution is the last step to obtain a gellable solution. This step is strongly exothermic and hence, substantial cooling is required to prevent premature gelation as in case of the processes disclosed in EP 0 527 401 A2 and EP 0 616 021 A1. Furthermore, boric acid and derivatives thereof have been classified as toxic to reproduction by the European Chemicals Agency (ECHA), which is why they are substances of very high concern (SVHC) and included in the candidate list for authorization. Hence, it is undesired to make use of such substances both for safety and ecological and economic reasons.

WO 94/04355 A1 a gellable solution for fire protection glazing, which is based on water glass. Gellability is achieved by addition an aqueous dispersion comprising silica derivatives or SiO₂ nanoparticles to the water glass solution. The gellable solutions, however, have high pH values, which is undesired since high pH values increase corrosion, in particular of glass panes. In addition, the temperature resistance of the resulting alkali silicate foam in the event of a fire is significantly lower than the temperature resistance of a foam from a conventional aluminum phosphate-based gel system.

Thus, there is a need to provide fire proofing gels, in particular for glazing applications, which do not require the use of toxic substances for their production, exhibit excellent fire protection properties including high thermal resistance and an only narrow temperature range of comparably low viscosity prior to foaming or even no such range at all, can be obtained with no or at least a reduced risk of undesired premature gelation occurring during their preparation, and are easier and safer to be handled and to be further processed, in particular, as they have a significantly lower viscosity than conventional fireproofing gels and hence allow to be easier to processed with minimized risk of undesired formation of blisters.

### Problem

It has been therefore an objective underlying the present invention to provide fire proofing gels, in particular for glazing applications, which do not require the use of toxic substances for their production, exhibit excellent fire protection properties including high thermal resistance and an only narrow temperature range of comparably low viscosity prior to foaming or even no such range at all, can be obtained with no or at least a reduced risk of undesired premature gelation occurring during their preparation, and are easier and safer to be handled and to be further processed, in particular, as they have a significantly lower viscosity than conventional fireproofing gels and hence allow to be easier processed with minimized risk of undesired formation of blisters.

### Solution

This objective has been solved by the subject-matter of the claims of the present application as well as by the preferred embodiments thereof disclosed in this specification, i.e., by the subject matter described herein.

A first subject-matter of the present invention is a hydrogel obtainable by a method comprising at least three steps, namely steps 1), 2) and 3),
1) reacting, in an aqueous medium, at least one constituent a1) comprising at least one phosphorous containing functional group with at least one constituent a2) comprising at least one amino group that it is reactive towards the at least one phosphorous containing functional group of constituent a1) to form a phosphorous containing intermediate product IP1,
2) adding at least one of at least one kind of (i) aluminum oxide hydroxide particles, at least one kind of (ii) aluminum oxide particles, and at least one kind of (iii) at least one aluminum containing precursor for generating the at least one kind of particles (i) and/or (ii) as constituent a3) to the aqueous mixture containing the intermediate product IP1 obtainable after having performed step 1) to form a phosphorous and aluminum containing intermediate product IP2, and
3) curing the aqueous mixture containing the intermediate product IP2 obtainable after having performed step 2) to form the hydrogel.

A further subject-matter of the present invention is a method for preparing the inventive hydrogel characterized in that it is obtainable by the inventive method described hereinbefore and hereinafter comprising the at least three steps 1), 2) and 3) defined hereinbefore and hereinafter.

A further subject-matter of the present invention is a use of the inventive hydrogel as fireproofing gel and/or for fire protection, in particular in glazing applications.

A further subject-matter of the present invention is a substrate having at least one surface, onto which the inventive hydrogel has been at least partially applied, wherein the surface of the substrate preferably is a glass or thermoplastic surface.

It has been in particular surprisingly found that the gels according to the present invention exhibit excellent fire protection properties and thus can be used as fire proofing gels, in particular for glazing applications. In particular, it has been found that the gels according to the present invention have an improved temperature resistance, in particular compared to fire proofing gels of the prior art such as fire proofing gels based on alkali silicate systems, and an only narrow temperature range of comparably low viscosity prior to foaming or even no such range at all, in particular compared to fire proofing gels of the prior art.

Moreover, it has been in particular surprisingly found that the gels according to the present invention can be obtained with no or at least a significantly reduced risk of undesired premature gelation occurring during their preparation, and are easier and safer to be handled and to be further processed. In particular, it has been found that due to the use of constituent a3), preferably of (i) aluminum oxide hydroxide particles as starting material for preparation of the gels according to the invention and addition of constituent a3), preferably of the aluminum oxide hydroxide particles in the last step of the inventive method, after both the at least one amine and the at least one phosphorous containing constituent have already been added, the reaction resulting in formation of the desired gellable liquid is not exothermic to the extent observed in the conventional processes for gel preparation, and hence, the risk of an undesired premature gelation can be minimized or at least reduced to a large extent compared to the prior art processes such as the processes disclosed in EP 0 527 401 A2, EP 0 616 021 A1, EP 0 596 324 A1 and EP 0 596 322 A1, which make use of an strongly exothermic reaction step as last step, wherein an amine (or a reaction product of an amine and boric acid) is added to the Al(H₂PO₄)₃ solution initially prepared to obtain a gellable solution. It has been found that by using constituent a3), in particular (i) aluminum oxide hydroxide particles, as aluminum source a synthesis via initial formation of an Al(H₂PO₄)₃ solution is no longer necessary.

In particular, it has been found that the gels according to the present invention have a significantly lower (initial) viscosity than conventional fireproofing gels, e.g., as the gels disclosed in any of EP 0 527 401 A2, and EP 0 616 021 A1, and hence, e.g., allow to be easier processed with minimized risk of undesired formation of blisters, in particular when filling inter-pane spaces for glazing applications.

Further, it has been in particular found that that the gels according to the present invention do not require the use of toxic substances for their production such as of boric acid and/or derivatives thereof without imparting any of their properties, in particular any of their fire protection properties.

In addition, it has been in particular found that that the gels according to the present invention have a comparably low pH value and in particular a significantly lower pH value than the gels disclosed in WO 94/04355 A1, which is advantageous as high pH values increase corrosion, in particular of glass panes.

Further, it has been found that that the gels according to the present invention have a higher aluminum content that the gels of the prior art, which has been in particular achieved by using constituent a3), in particular (i) aluminum hydroxide particles, as aluminum source, without increase of the initial viscosity. An increase of the aluminum content to this extent is not possible when preparing fireproofing gels according to conventional processes such as described in EP 0 527 401 A2, via formation of an aluminum hydrogen phosphate solution as intermediate, since the viscosity of the gellable solution increases sharply and makes further processing impossible. It has been found that the melting behavior of the gels is improved in this manner, in particular in the 100 to 300 °C temperature range. It has been further found that the melting behavior of the gels can be further improved by additionally making use of other inorganic particles besides the constituent a3), in particular (i) the aluminum oxide hydroxide particles, such as silica, titanium and/or zirconium chelate particles, etc.

Finally, it has been found that that the gels according to the present invention have an excellent transparency as well.

### Detailed description of the invention

The term "comprising" in the sense of the present invention preferably has the meaning of "consisting of". With regard, e.g., to the hydrogel, it is possible - in addition to all mandatory constituents or elements present therein - for one or more of the further optional constituents identified hereinafter to be also included therein. All constituents may in each case be present in their preferred embodiments as identified below.

The proportions and amounts in wt.-% (% by weight) of any of the constituents given hereinafter, which are present in the hydrogel add up to 100 wt.-%, based in each case on the total weight of the hydrogel.

### Hydrogel

The inventive hydrogel is obtainable by the inventive method comprising the at least three steps 1), 2) and 3).

The term "hydrogel" is a term known by a person skilled in the art, e.g., from the IUPAC gold book definition of the term "gel", wherein the fluid referred to is water, and, hence, wherein the gel accordingly represents a "hydrogel" (PAC, 2007, 79, page 1806). The term "hydrogel" in the sense of the present invention preferably refers to a three-dimensional network, which is expanded throughout its whole volume by water as fluid, whereas the network as such is non-fluid. The network can be an organic (and polymeric) and/or an inorganic (and colloidal) network. Polymeric (or polymer) networks are, e.g., formed by polymerization of suitable monomers, whereas for inorganic gels liquids with colloidal particles, also known as sols, are used, which agglomerate, e.g., by physical interactions, and/or aggregate, e.g., by chemical interactions, to form the three-dimensional network. A hydrogel is capable of absorbing large quantities of water. The network can be held together by various forces such as covalent interactions, dipole-dipole forces, hydrogen bonds and/or ionic interactions.

The inventive hydrogel is suitable for us as fireproofing gel (fire protection gel), in particular for glazing applications.

Preferably, the hydrogel has an aluminum content, calculated as element and based on the total weight of the hydrogel, in a range of from 1.0 to 10.0 wt.-%, more preferably of from 1.5 to 9.5 wt.-%, still more preferably of from 2.0 to 9.0 wt.-%, even more preferably of from 2.5 to 8.5 wt.-%, still more preferably of from 3.0 to 8.0 wt.-%, yet more preferably of from 3.5 or of from >3.5 to 7.5 wt.-%, most preferably of from 4.0 to 7.5 or to 7.0 wt.-%. The aluminum content is in particular achieved by using constituent a3) in step 2).

Preferably, the hydrogel has a pH value in a range of from 4.0 to 7.0, more preferably of from 4.1 to 6.5 or to 6.2, still more preferably of from 4.2 to 5.9, even more preferably of from 4.3 to 5.8, still more preferably of from 4.4 to 5.7, yet more preferably of from 4.5 to 5.6, most preferably of from 4.6 to 5.4 or to 5.2. The pH value is determined at ambient conditions (23 °C ± 3 °C and 1013 mbar).

Preferably, the hydrogel has a solid content in a range of from 35.0 to 80.0 wt.-%, preferably of from 40.0 or 45.0 to 77.5 wt.-%, more preferably of from 50.0 to 75.0 wt.-%, even more preferably of from 55.0 to 70.0 wt.-%. The solid content is determined according to the method described in the 'methods' section.

Preferably, the hydrogel has a water content in a range of from 20.0 to 65.0 wt.-%, preferably of from 22.5 to 60.0 or to 55.0 wt.-%, more preferably of from 25.0 to 50.0 wt.-%, even more preferably of from 30.0 to 45.0 wt.-%.

Preferably, the melting temperature range of the hydrogel is less than 100 °C, more preferably less than 90 °C, even more preferably less than 80 °C, below the foaming temperature of the hydrogel.

Melting and foaming temperatures are determined according to the method described in the 'methods' section.

Preferably, the hydrogel is optically clear and transparent after having carried out gelling step 3).

The hydrogel is able to form a high temperature resistant and insulating foam on the surface of a substrate it is applied on such as a glass substrate, e.g., a glass pane, or a thermoplastic and preferably transparent substrate.

### Step 1), constituents a1) and a2) and intermediate product IP1

### Step 1)

In step 1) in an aqueous medium, at least one constituent a1) comprising at least one phosphorous containing functional group is reacted with at least one constituent a2) comprising at least one amino group that it is reactive towards the at least one phosphorous containing functional group of constituent a1) to form a phosphorous containing intermediate product IP1.

Preferably, constituent a2) is added to constituent a1) or vice versa. More preferably, constituent a2) is added to constituent a1), in particular to an aqueous solution of constituent a1). Since step 1) is an exothermic step, it is preferably performed by cooling the reaction mixture and/or slow addition of the constituents to each other, more preferably by cooling and/or slow addition of constituent a2) to a1), preferably under stirring. After addition has been completed, stirring is preferably continued for at least 15 minutes.

Preferably, constituents a1) and a2) are reacted with each other in step 1) such that the molar ratio of nitrogen of the amino group(s) of constituent a2), calculated as element, to phosphorous present in constituent a1), calculated as element, is in a range of from 1.10:0.75 to 1.10:1.30, more preferably of from 1.00:0.80 to 1.00:1.20, still more preferably of from 1.00:0.90 to 1.00:1.10, even more preferably of from 1.00:1.00.

### Constituent a 1)

At least one constituent a1) is used, which comprises at least one phosphorous containing functional group. The at least one phosphorous containing functional group is reactive towards the at least one amino group of the at least one constituent a2). Preferably, the at least one constituent a1) as such is a phosphorous containing constituent.

Preferably, constituent a1) is a water-soluble constituent. Solubility is determined at a temperature of 23 °C ± 3 °C and atmospheric pressure (1.013 bar).

Preferably, the at least one phosphorous containing functional group is selected from phosphate groups including pyrophosphate and polyphosphate groups, phosphonate groups, phosphorous oxides, and mixtures thereof. The term "phosphate groups" includes corresponding phosphate salts and esters thereof in each case. The term "phosphonate groups" includes corresponding phosphonate salts and esters thereof. More preferably, the at least one phosphorous containing functional group is selected from phosphoric acid groups, phosphoric acid ester groups, phosphonic acid groups, phosphonic acid ester groups, and mixtures thereof, more preferably selected from phosphoric acid groups, phosphoric acid ester groups, and mixtures thereof, even more preferably selected from phosphoric acid groups. The terms "phosphoric acid groups" and "phosphoric acid ester groups" in each case include corresponding salts thereof and the terms "phosphonic acid groups" and "phosphonic acid ester groups" in each case includes corresponding salts and esters thereof.

Preferably, constituent a1) is used in step 1) in form of an aqueous solution. Said solution is preferably prepared by mixing constituent a1) with water, more preferably under stirring. Preferably, the aqueous solution formed has a solid content in a range of from 75 to 95 wt.-%, more preferably of from 80 to 90 wt.-%.

Most preferably, constituent a1) at least comprises phosphoric acid as constituent a1) comprising at least one phosphorous containing functional group.

It is, however, possible to use at least two or even more different constituents a1), each of which has at least one phosphorous containing functional group. In particular, it is possible to use a further constituent comprising at least one phosphorous containing functional group besides phosphoric acid as constituent a1).

Hence, preferably at least phosphoric acid is used as constituent a1), optionally together with at least one further constituent comprising at least one phosphorous containing functional group, which is different from phosphoric acid. Preferably, the least one further constituent comprising at least one phosphorous containing functional group is selected from phosphonic acids including diphosphonic acids. An example thereof is etidronic acid. Preferably, in particular at least one phosphonic acid is used besides phosphoric acid as constituent a1), up to 66 wt.-% of the amount of phosphoric acid needed for performance of step 1) can be replaced with at least one phosphonic acid. Alternatively, or additionally, the least one further constituent comprising at least one phosphorous containing functional group (to be used besides phosphoric acid and optionally at least one phosphonic acid) is selected from phosphates different from phosphoric acid such as from biphosphates. Preferably, in particular at least one phosphate such as at least one biphosphate is used besides phosphoric acid as constituent a1), up to 10 wt.-%, more preferably up to 5 wt.-%, of the amount of phosphoric acid needed for performance of step 1) can be replaced with said at least one phosphate.

It has been found using a further constituent comprising at least one phosphorous containing functional group besides phosphoric acid as constituent a1) further improves the melting properties of the hydrogel, in particular in a temperature range of from 100 to 300 °C. In the known manufacturing processes of hydrogels, e.g., via the aluminum hydrogen phosphate solution route, introduction of phosphonic acid and/or other phosphates to this extent is not possible without optical deterioration of the hydrogel and/or increase in viscosity of the gellable starting solution.

It is also possible to use as constituent a1), an aqueous solution of aluminum dihydrogen phosphate (Al(H₂PO₄)₃), which is, e.g., obtainable from a reaction of phosphoric acid and aluminum trihydroxide, in particular in case it is desired to further increase the aluminum content of the hydrogel.

### Constituent a2)

At least one constituent a2) is used, which has at least one amino group. The at least one amino group of constituent a2) is reactive towards the at least one phosphorous containing functional group of constituent a1). Constituent a2) may have precisely one amino group, which is preferred, but may have more than one amino group as well. It is possible to use at least two or even more different constituents a2), each of which has at least one amino group.

The term "amino group" includes primary, secondary and tertiary amino groups. It is preferred if at least one constituent a2) used has at least one primary amino group.

Preferably, constituent a2) is an amine, more preferably at least one water-soluble amine. Solubility is determined at a temperature of 23 °C ± 3 °C and atmospheric pressure (1.013 bar).

Preferably, constituent a2) comprises at least one organic amine, more preferably at least one aliphatic organic amine, even more preferably at least one aliphatic organic amine having at most 6 carbon atoms, still more preferably at most 4 or 3 carbon atoms.

Preferably, at least one constituent a2) is used, which contains at least one further functional group, more preferably at least one OH-group, besides the at least one amino group, in view of the preferably desired sufficient water solubility of constituent a2). An example of such an amine is monoethanolamine. Further examples of suitable amines are diisopropanol amine ethylamine, diethanolamine, 3-amino-1-propanol, triethanolamine and 1-amino-2-propanol.

Preferably, constituent a2) comprises at least one water-soluble amine, more preferably at least one water-soluble organic amine, still more preferably at least one water-soluble aliphatic organic amine, even more preferably at least one water-soluble aliphatic organic amine having at most 6 carbon atoms, still more preferably at most 4 or 3 carbon atoms, and optionally having at least one OH-group besides the at least one amino group.

### Intermediate product IP1

At the end of step 1) an aqueous mixture containing the intermediate product IP1 is obtained.

Preferably, IP1 represents a phosphorous amine salt such as an amine salt of an acid phosphate, in particular when at least phosphoric acid is used as constituent a1). In case an aqueous solution of aluminum dihydrogen phosphate (Al(H₂PO₄)₃) is used at least partially as constituent a1), IP1 represents a phosphorous aluminum amine salt.

### Step 2), constituent a3) and intermediate product IP2 as well as further optional constituents a4) and a5)

### Step 2)

In step 2) at least one of at least one kind of (i) aluminum oxide hydroxide particles, at least one kind of (ii) aluminum oxide particles, and at least one kind of (iii) at least one aluminum containing precursor for generating the at least one kind of particles (i) and/or (ii) as constituent a3) is added to the aqueous mixture containing the intermediate product IP1 obtainable after having performed step 1) to form a phosphorous containing intermediate product IP2.

Preferably, constituent a3) is added to the aqueous mixture containing the intermediate product IP1 under stirring and optionally under cooling. Preferably, constituent a3) is used in step 2) in form of an aqueous dispersion of the particles used, in particular in case of (i) and/or (ii).

After addition of constituent a3) has been completed, stirring is preferably continued for at least 15 minutes.

Preferably, intermediate product IP1 and constituent a3) are reacted with each other in step 2) such that the molar ratio of phosphorous present in intermediate product IP1, calculated as element, to aluminum present in constituent a3), calculated as element, is in a range of from 5:1 to 1:1 or to 1.1:1, more preferably of from 4:1 to 1.2:1, still more preferably of from 3:1 or <3:1 to 1.3:1, even more preferably of from 2.8:1 to 1.4:1, yet more preferably of from 2.5:1 to 1.5:1, most preferably of from 2.3:1 to 1.6:1.

### Constituent a3)

At least one kind of (i) aluminum oxide hydroxide particles, at least one kind of (ii) aluminum oxide particles, and/or at least one kind of (iii) at least one aluminum containing precursor for generating the at least one kind of particles (i) and/or (ii) is used as constituent a3) in step 2).

The term "aluminum oxide hydroxide" is known to a person skilled in the art. It subsumes compounds having the chemical formula AlO(OH). Among these, γ-AlO(OH) is preferred. Consequently, the aluminum oxide hydroxide particles used as constituent a3) in case of (i) are not to be confused with Al₂O₃ (alumina, aluminum oxide), which, however, can also be used as constituent a3) in case of (ii), or not to be confused with Al(OH)₃ (aluminum trihydroxide) particles.

Any suitable aluminum containing precursors (iii) for generating the at least one kind of particles (i) and/or (ii) can be used as constituent a3), which are able to form the particles (i) and/or (ii) in an aqueous medium, for instance by hydrolysis of the precursor in an aqueous environment and subsequent condensation reactions, which optionally may also serve as linkers between already present particles such as particles (i) and/or (ii). Examples of suitable aluminum containing precursors (iii) are aluminum alkoxides such as aluminum alkoxides derived from making use of aliphatic C₁₋₈ alcohols or of aliphatic C₁₋₄ alcohols such as aluminum triethoxide and/or aluminum triisopropoxide.

Preferably, at least one of at least one kind of (i) aluminum oxide hydroxide particles and at least one kind of (ii) aluminum oxide particles, more preferably at least one of at least one kind of (i) aluminum oxide hydroxide particles, is used as constituent a3).

Particularly preferred examples of aluminum oxide hydroxides for use as constituent a3) are boehmites. The term "boehmite" in the sense of the present invention preferably includes "pseudoboehmites", which are typically denoted in crystallography as a form of boehmite with a higher water content. Therefore, in the sense of the present invention the term "boehmite" as used preferably includes "pseudoboehmites", if not stated otherwise.

Hence, at least one kind of boehmite particles is preferably used as constituent a3) in step 2). As mentioned above this preferably includes pseudoboehmite particles as well.

Preferably, constituent a3) is used in step 2) in form of an aqueous dispersion of the particles such as particles (i) and/or (ii). Said dispersion is preferably prepared by mixing constituent a3) with water, more preferably under stirring. Mixing is preferably performed for at least 1 h. Preferably, the aqueous dispersion formed has a solid content in a range of from 10 to 40 or to 30 wt.-%, more preferably of from 12.5 to 25 wt. -%.

The surface of the aluminum oxide hydroxide particles, preferably of the boehmite particles, and/or of the aluminum oxide particles may be at least partially modified or unmodified. In the sense of the present invention the term "modification" in this context is preferably understood as a surface treatment of the aluminum oxide hydroxide particles or of the aluminum oxide particles, preferably of the aluminum oxide hydroxide particles, more preferably of the boehmite particles, with at least one suitable surface treatment agent such as at least one acid.

Unmodified aluminum oxide hydroxide particles have a cationic surface in an aqueous medium with a pH value ≥ 7.5. Such unmodified aluminum oxide hydroxide particles are customarily employed exclusively in an acidic application medium. A use of such unmodified boehmite particles is disclosed for example in WO 2004/031090 A2, in WO 2006/060510 A1 and in US 2008/0090012 A1.

An at least partial modification is accomplished preferably by surface treatment of the particles such as the aluminum oxide hydroxide particles with at least one surface treatment agent, preferably with formation of ionic and/or covalent groups. Aluminum oxide hydroxide particles being at least partly surface modified with at least one organic acid are known. For example, corresponding boehmite products modified at least partly with at least one organic acid are available commercially and are sold for example under the designations Disperal^{®} HP 14/7 (citric acid modified), Disperal^{®} OS-1 (paratoluene sulfonic acid), and Dispal^{®} 25SLR by the company Sasol. Modifications with an inorganic acid such as with nitric acid are also known. Such products are, e.g., commercially available as Disperal^{®} P2 and Disperal^{®} P2W from the company Sasol.

Preferably, the aluminum oxide hydroxide particles and/or the aluminum oxide particles, more preferably the aluminum oxide hydroxide particles, used as constituent a3) have been surface treated prior to their use as constituent a3) in step 2) with at least one acid, more preferably with at least one inorganic acid, even more preferably with nitric acid.

In case said particles, in particular the aluminum oxide hydroxide particles, have been surface treated with nitric acid, they preferably have a nitrate content in a range of from 3.0 to 6.0 wt.-%, more preferably of from 3.5 to 5.5 wt.-%, even more preferably of from 4.0 to 5.0 wt.-%, in each case based on the total weight of the particles.

Preferably, the (i) aluminum oxide hydroxide particles and/or the (ii) aluminum oxide particles used as constituent a3) or having been generated from (iii) the aluminum containing precursor, preferably the (i) aluminum oxide hydroxide particles, in step 2)
have a crystallite size (120 x-ray plane), preferably as determined by means of X-ray diffractometry, in a range from 1 nm to 20 nm, more preferably of from 2 to 15 nm, even more preferably of from 3 to 10 nm, still more preferably of from 4 to 8 nm, and/or
have a dispersed particle size, preferably as determined by means of photon correlation spectroscopy (PCS), in a range of from 5 nm to 100 nm, more preferably of from 10 to 75 nm, even more preferably of from 15 to 50 nm, still more preferably of from 20 to 35 nm or to 30 nm, and/or
have a d₅₀ average particle size, preferably as determined by means of photon correlation spectroscopy (PCS), in a range of from 10 to 250 µm, more preferably of from 15 to 150 µm, still more preferably of from 20 to 100 µm, even more preferably of from 25 to 75 µm, yet more preferably of from 30 to 50 µm.

Preferably, if the (i) aluminum oxide hydroxide particles and/or the (ii) aluminum oxide particles exhibit at least one and more preferably each of the aforementioned sizes, the occurrence of any potential turbidity and/or sedimentation taking place in the hydrogel and/or during its preparation can be minimized or avoided.

Crystallite size, dispersed particle size and d₅₀ average particle size are determined according to the methods described in the 'methods' section. The measurement of the dispersed particle size preferably is performed on the particles when present in form of a sol such as a sol formed with water. The measurement of the d₅₀ average particle size and of the crystallite size preferably is performed on the particles when present in form of a solid powder.

### Optional constituent a4)

In step 2), it is possible to make use of at least one further constituent a4) to be added to the aqueous mixture containing the intermediate product IP1 obtainable after having performed step 1) besides constituent a3) such as the at least one kind of aluminum oxide hydroxide particles. Said constituent a4) is hence different from a3). Within step 2), it may be added prior to addition of constituent a3), together with constituent a3), or after addition of constituent a3), preferably after addition of constituent a3).

Constituent a4) comprises and preferably consists of at least one kind of preferably surface modified silica particles (SiO₂ particles). Preferably, constituent a4), if used, is used in an amount of up to 10 wt.-%, based on the total weight of the hydrogel to be obtained. In case optional constituent a4) is added after addition of constituent a3), constituent a4), if used, is preferably used in an amount of up to 10 wt.-%, based on the total weight of the mixture containing IP2.

It has been found using a further constituent a4) further improves the melting properties of the hydrogel, in particular in a temperature range of from 100 to 300 °C. In the known manufacturing processes of hydrogels, e.g., via the aluminum hydrogen phosphate solution route, introduction of preferably surface modified silica particles to this extent is not possible without optical deterioration of the hydrogel and/or increase in viscosity of the gellable starting solution.

### Optional constituent a5)

In step 2), it is possible to make use of at least one further constituent a5) to be added to the aqueous mixture containing the intermediate product IP1 obtainable after having performed step 1) besides constituent a3) such as the at least one kind of aluminum oxide hydroxide particles. Said constituent a5) is hence different from a3) and is also different from optional constituent a4). Within step 2), it may be added prior to addition of constituent a3), together with constituent a3), or after addition of constituent a3), preferably after addition of constituent a3).

Constituent a5) comprises and preferably consists of at least one kind titanate and/or zirconate. Preferably, constituent a5), if used, is used in an amount of up to 10 wt.-%, more preferably of up to 6 wt.-%, based on the total weight of the hydrogel to be obtained. In case optional constituent a5) is added after addition of constituent a3), constituent a5), if used, is preferably used in an amount of up to 10 wt.-%, based on the total weight of the mixture containing IP2.

Preferably, the organic group(s) of titanate and/or zirconate constituent a5) has 1 to 20 carbon atoms. Preferably, the organic group(s) are bonded to titanium and/or zirconium via divalent oxygen atoms. Examples of such organic groups are acetyl acetonate groups. Preferably, constituent a5) is a titanium and/or zirconium alkoxide, more preferably, wherein each alkoxide group represents a -O-C₁-C₈ group, more preferably a -O-C₃-C₈ group. Examples of alkoxide groups are n-butyl alkoxides, n-propyl alkoxides, isopropyl alkoxides. Most preferred titanates and/or zirconates are tetra-n-butyl zirconate (available under the trade name Tyzor^{®} NBZ), tetrapropyl titanate (available under the trade name Tyzor^{®} TPT by Dorf Ketal) and titanium acetyl acetonate (available under the trade names Tyzor^{®} AA 75, Tyzor^{®} AA 65 and Tyzor^{®} AA 105 by Dorf Ketal).

It has been found using a further constituent a5) further improves the melting properties of the hydrogel, in particular in a temperature range of from 100 to 300 °C. In the known manufacturing processes of hydrogels, e.g., via the aluminum hydrogen phosphate solution route, introduction of at least one titanate and/or zirconate to this extent is not possible without optical deterioration of the hydrogel and/or increase in viscosity of the gellable starting solution.

### Optional constituent a6)

In step 2), it is possible to make use of at least one further constituent a6) to be added to the aqueous mixture containing the intermediate product IP1 obtainable after having performed step 1) besides constituent a3) such as the at least one kind of aluminum oxide hydroxide particles. Said constituent a6) is hence different from a3) and is also different from optional constituents a4) and a5). Within step 2), it may be added prior to addition of constituent a3), together with constituent a3), or after addition of constituent a3), preferably prior to addition of constituent a3).

Constituent a6) comprises and preferably consists of at least one kind of organic additive, which preferably comprises at least one functional group selected from OH-groups, carboxyl groups, amino groups, and mixtures thereof, and is more preferably selected from the group consisting of glycerol, pentaerythitol, carboxylic acids (e.g. citric acid, lactic acid), water-soluble oligomers and polymers (e.g. polyethylenimine, cellulose and their derivatives such as carboxymethylcelluloses). Each organic additive used as constituent a6) can be monomeric, oligomeric or polymeric. Preferably, constituent a6), if used, is used in an amount of up to 10 wt.-%, based on the total weight of the hydrogel to be obtained.

Preferably, in step 2) at least one further constituent, which is different from constituent a3), is added to the aqueous mixture containing the intermediate product IP1 obtainable after having performed step 1) besides the constituent a3) such as the at least one kind of aluminum oxide hydroxide particles, wherein said at least one further constituent is added prior to constituent a3), together with constituent 3) or after constituent a3) to the aqueous mixture containing the intermediate product IP1 and wherein said at least one further constituent is selected from constituents a4), a5) and a6), which are different from one another, wherein constituent a4) comprises preferably surface modified silica particles, wherein constituent a5) comprises at least one titanate and/or zirconate, and wherein constituent a6) comprises at least one organic additive, which preferably comprises at least one functional group selected from OH-groups, carboxyl groups, amino groups, and mixtures thereof.

### Intermediate product IP2

At the end of step 2) an aqueous mixture containing the intermediate product IP2 is obtained. Preferably, the mixture is a solution, more preferably a gellable solution (also referred to as gellable starting solution). IP2 is both an aluminum and phosphorous containing intermediate product.

Preferably, the solid content of said mixture is in a range of from 45 to 70 wt.-%, more preferably of from 50 to 65 or to 60 wt.-%.

Preferably, the pH value of said mixture is in a range of from 4.5 to 7.0 or to 6.2, more preferably of from 4.7 to 6.0, even more preferably of from 4.9 to 5.8.

### Step 3)

In step 3) the aqueous mixture containing the intermediate product IP2 obtainable after having performed step 2) is cured to form the hydrogel. Step 3) represents a gelling step.

Preferably, curing is performed at an elevated temperature, more preferably at a temperature in a range of from 50 to 100 °C, even more preferably of from 75 or 80 to 95 °C. Preferably, curing is performed for a duration in a range of from 1 to 48 h, more preferably of from 2 to 24 h, even more preferably of from 5 to 10 h.

### Method for preparing the hydrogel

A further subject-matter of the present invention is a method for preparing the inventive hydrogel characterized in that it is obtainable by the inventive method described hereinbefore and hereinafter comprising the at least three steps 1), 2) and 3) defined hereinbefore and hereinafter.

All preferred embodiments described above herein in connection with the inventive hydrogel and preferred embodiments thereof are also preferred embodiments of the inventive method.

### Use

A further subject-matter of the present invention is a use of the inventive hydrogel as fireproofing gel and/or for fire protection, in particular in glazing applications.

All preferred embodiments described above herein in connection with the inventive hydrogel and preferred embodiments thereof and the inventive method and preferred embodiments thereof are also preferred embodiments of the inventive method.

### Substrate

A further subject-matter of the present invention is a substrate having at least one surface, onto which the inventive hydrogel has been at least partially applied, wherein the surface of the substrate preferably is a glass or thermoplastic surface. Both the glass and the thermoplastic surface are preferably transparent.

Preferably, the hydrogel is able to form a temperature resistant and/or insulating foam on the surface of a substrate.

### METHODS

### 1. Melting and foaming temperatures

Determination of melting temperatures and foaming temperatures was performed visually using a heating stage microscope (model Axio Lab.A1) from the company Zeiss with a TS1500 heating stage unit from the company Linkam at a heating rate of 10 K/min.

### 2. Solid content

The solids content was determined thermogravimetrically with a heating rate of 10 K/min up to 130°C using a STA 449 C/CD device from Netzsch.

### 3. Average particle size of the aluminum oxide hydroxide or aluminum oxide particles

The average particle size of the aluminum oxide hydroxide or aluminum oxide particles is determined by photon correlation spectroscopy (PCS) in accordance with DIN ISO 13321 (date: October 2004) on the particles in powder form. Measurement took place using a "Zetasizer Nano S-173" from Malvern Instruments at 25 ± 1°C. The average particle size of the particles in powder form determined in this manner refers to the arithmetic number average of the particle diameter (z-average mean). In particular d₅₀ average particle sizes of the aluminum oxide hydroxide or aluminum oxide particles can be determined in this manner.

### 4. Dispersed particle sizes of the aluminum oxide hydroxide particles

The dispersed particle size of the aluminum oxide hydroxide or aluminum oxide particles is determined by means of photon correlation spectroscopy (PCS) in accordance with DIN ISO 13321 (date: October 2004) on the particles in form of their sols. Measurement took place using a "Zetasizer Nano S-173" from Malvern Instruments at 25 ± 1°C. The "dispersed particle size" of the particles, when present in a sol, determined in this manner refers to the arithmetic number average of the particle diameter (z-average mean).

### 5. X-ray powder diffraction

X-ray powder diffraction is used for determination of the crystallite size of aluminum oxide hydroxide or aluminum oxide particles, preferably using a conventional X-ray diffractometer, such as from Siemens (Siemens D5000) or Philips (Philips X'Pert). Crystallite sizes are expressed by the length obtained for diffraction peak 120. The 120 measurement is the distance along a line perpendicular to the (120) plane. Analysis of peak-width on X-ray powder diffraction peaks at 120 gives the values commonly reported for crystallite sizes. The measured 120 crystal size is normal (90°) to the 120 plane and is represented by the arrow. This peak (crystal plane) is the most accessible in aluminum oxide hydroxide's or aluminum oxide's x-ray diffraction pattern and has been used for the characterization.

### 5. Aluminum content

The aluminum content of the hydrogels is calculated.

### EXAMPLES

The following examples further illustrate the invention but are not to be construed as limiting its scope.

### 1. Preparation of hydrogels

### 1.1 Comparative example 1:

To ortho-phosphoric acid (85 wt.-%) in water aluminum hydroxide was added and the resulting mixture was heated at 100 °C with stirring for 1 hour until a 66 wt.-% solution of aluminum dihydrogen phosphate (Al(H₂PO₄)₃) was formed. The resulting mixture was cooled to room temperature. Ethanolamine was added to the prepared aluminum dihydrogen phosphate solution with vigorous stirring until a molar ratio of phosphoric acid to ethanolamine of 1:1 was obtained (calculated as molar ratio of phosphorous (element) to nitrogen (element)). The addition of the amine caused the solution to heat up and it had to be cooled by means of a water bath. The highly viscous solution was poured into sealable test tubes and placed in a drying oven at 80 °C for 48 h. A clear stable gel had formed.

### 1.2 Example 1 (inventive):

To ortho-phosphoric acid (85 wt.-%) in water ethanolamine was added until an 85 wt.-% solution of phosphoric acid-ethanolamine having a molar ratio of phosphoric acid to ethanolamine of 1:1 was obtained (calculated as molar ratio of phosphorous (element) nitrogen (element)). This mixture was cooled to room temperature. Commercially available water dispersible aluminum oxide hydroxide particles having a dispersed particle size of about 25 nm, were combined with water under vigorous stirring to form a 22 wt.-% dispersion. To the prepared phosphoric acid-ethanolamine solution, the boehmite nanoparticles dispersion was then added under strong stirring until a molar ratio of aluminum to phosphorous of 1:2 was obtained (calculated as elements). The solid content was 54 wt.-%. The solution was poured into sealable test tubes and placed in a drying oven for 8 h at 80 °C. A clear stable gel had formed.

### 1.3 Example 2 (inventive):

To ortho-phosphoric acid (85 wt.-%) in water ethanolamine was added until an 85 wt.-% solution of phosphoric acid-ethanolamine having a molar ratio of phosphoric acid to ethanolamine of 1:1 was obtained (calculated as molar ratio of phosphorous (element) to nitrogen (element)). This mixture was cooled to room temperature. Commercially available water dispersible aluminum oxide hydroxide particles, having a dispersed particle size of about 25 nm, were combined with water under vigorous stirring to form a 22 wt.-% dispersion. To the prepared phosphoric acid-ethanolamine solution, first glycerol and then citric acid were added under strong stirring. After each addition, stirring was continued for 5 more minutes. Then, the prepared boehmite nanoparticle dispersion was added until a molar ratio of aluminum to phosphorous of 1:1.5 (calculated as elements) was obtained. The solids content was 57 wt.-%. The glycerol content was 5 wt.-% and the citric acid content was 2.5 wt.-%. The solution was poured into sealable test tubes and placed in a drying oven for 24 h at 80 °C. A clear stable gel had formed.

### 1.4 Example 3 (inventive):

To ortho-phosphoric acid (85 wt.-%) in water etidronic acid (1-hydroxyethylidene-1,1-diphosphonic acid; HEDP) and ethanolamine were added until an 85 wt.-% solution of phosphoric acid-etidronic acid-ethanolamine having a molar ratio of phosphoric acid to etidronic acid to ethanolamine of 0.95:0.05:1 was obtained (calculated as molar ratio of phosphorous (element) for both phosphoric acid and etidronic acid to nitrogen (element)). This mixture was cooled to room temperature. Commercially available water dispersible aluminum oxide hydroxide particles, having a dispersed particle size of about 25 nm, were combined with water under vigorous stirring to form a 22 wt.-% dispersion. To the prepared phosphoric acid-etidronic acid-ethanolamine solution, the boehmite nanoparticle dispersion was added under strong stirring until a molar ratio of aluminum to phosphorous of 1:2 (calculated as elements) was obtained. The solid content was 58 wt.-%. The solution was poured into sealable test tubes and placed in a drying oven for 5 h at 80 °C. A slightly turbid stable gel had formed.

### 1.5 Example 4 (inventive):

To ortho-phosphoric acid (85 wt.-%) in water ethanolamine was added until an 85 wt.-% solution of phosphoric acid-ethanolamine having a molar ratio of phosphoric acid to ethanolamine of 1:1 was obtained (calculated as molar ratio of phosphorous (element) to nitrogen (element)). This mixture was cooled to room temperature. This mixture was cooled to room temperature. Commercially available water dispersible aluminum oxide hydroxide particles, having a dispersed particle size of about 25 nm, were combined with water under vigorous stirring to form a 22 wt.-% dispersion. To the prepared phosphoric acid-ethanolamine solution, the boehmite nanoparticle dispersion was added under strong stirring until a molar ratio of aluminum to phosphorous of 1:2 (calculated as elements) was obtained. To this solution, a commercially available 28 wt.-% aqueous dispersion of colloidal silica was added with vigorous stirring. The solid content was 54 wt.-% and the content of the colloidal silica was 15 wt.-%. The solution was poured into sealable test tubes and placed in a drying oven at 80 °C for 16 h. A clear stable solution was obtained. A clear stable gel had formed.

### 1.6 Example 5 (inventive):

To ortho-phosphoric acid (85 wt.-%) in water aluminum hydroxide was added and the mixture was heated at 100 °C for 1 hour with stirring until a 66 wt.-% solution of aluminum dihydrogen phosphate (Al(H₂PO₄)₃) had been formed. This mixture was cooled to room temperature. Ethanolamine was added to the prepared aluminum dihydrogen phosphate solution with vigorous stirring until a molar ratio of phosphorous to amine of 1:1 (calculated as molar ratio of phosphorous (element) to nitrogen (element)) was obtained. The addition of the amine caused the solution to heat up and it had to be cooled by means of a water bath. Commercially available water dispersible aluminum oxide hydroxide particles, having a dispersed particle size of about 25 nm, were combined with water under vigorous stirring to form a 15 wt.-% dispersion. To the prepared aluminum dihydrogen phosphate-ethanolamine solution, the boehmite nanoparticles dispersion was added under vigorous stirring until a molar ratio of aluminum to phosphorous of 1:1.5 (calculated as elements) was obtained. The solid content was 53 wt.-%. The viscosity of the gellable solution was significantly higher than that of the solutions with only boehmite nanoparticles as the aluminum source as in examples 1 to 4. The solution was poured into sealable test tubes and placed in a drying oven for 24 h at 80 °C. A slightly turbid stable gel had formed.

### 1.7 Example 6 (inventive):

To ortho-phosphoric acid (85 wt.-%) in water ethanolamine was added until an 85 wt.-% solution of phosphoric acid-ethanolamine having a molar ratio of phosphoric acid to ethanolamine of 1:1 was obtained (calculated as molar ratio of phosphorous (element) to nitrogen (element)). This mixture was cooled to room temperature. Commercially available water dispersible aluminum oxide hydroxide particles, having a dispersed particle size of about 25 nm, were combined with water under vigorous stirring to form a 22 wt.-% dispersion. To the prepared phosphoric acid-ethanolamine solution, the boehmite nanoparticle dispersion was added under strong stirring until a molar ratio of aluminum to phosphorus of 1:2 (calculated as elements) was obtained. To this solution, a commercially available 50 wt.-% aqueous dispersion of lactide acid chelated titanate was added with vigorous stirring. The solids content was 60 wt.-% and the content of lactide acid chelated titanate was 8 wt.-%. The solution was poured into sealable test tubes and placed in a drying oven at 85 °C for 24 h. A clear stable gel had formed.

### 2. Properties of the hydrogels

**2.1** Melting points and foaming points of the prepared hydrogels were determined according to the method disclosed in the 'methods' section and are shown in Table 1.

**Table 1 - melting and foaming points**

| *Hydrogel according to* | *Melting temperature [°C]* | *Foaming temperature [°C]* | *Temperature range of low viscosity (difference in temperature between melting and foaming temperature) [°C]* |
|---|---|---|---|
| Comparative example 1 | 130 | 270 | 140 |
| Example 1 | 140 | 215 | 75 |
| Example 2 | 165 | 198 | 33 |
| Example 3 | 148 | 189 | 41 |
| Example 4 | - | 212 | - |
| Example 5 | 153 | 191 | 38 |
| Example 6 | 158 | 220 | 62 |

| | | | |
|---|---|---|---|
| "-" = the hydrogel did not melt under the tested conditions | | | |

These results show that the hydrogels according to the present invention display excellent fireproofing properties and, hence, can be used as fireproof gels. In particular, the hydrogels according to the present invention have a significantly smaller temperature range of low viscosity than comparative hydrogels such as comparative example 1.

**2.2** The aluminum contents (calculated) of the prepared hydrogels were determined and are shown in Table 2.

**Table 2 - Al content**

| *Hydrogel according to* | *Aluminum content (calculated as element) [wt.-%]* |
|---|---|
| Comparative example 1 | 3.4 |
| Example 1 | 3.9 |
| Example 2 | 4.6 |
| Example 3 | 4.2 |
| Example 4 | 3.6 |
| Example 5 | 5.1 |
| Example 6 | 4.0 |

As it is evident from Table 2, the aluminum content of the hydrogels according to the present invention was higher in each case compared to the aluminum content of hydrogel of comparative example 1.

**2.3** In addition, it has been found that the viscosities of each of the hydrogels of examples 1 to 6 were lower than in case of comparative example 1. Hence, the hydrogels of examples 1 to 6 are easier to handle and to further process than the hydrogel of comparative example 1. Further, due to their lower viscosities they can be applied and used without the undesired occurrence of blisters, in contrast to hydrogels having significantly higher viscosities such as comparative example 1.

Further, the hydrogels of examples 1 to 4 and 6 are obtained under milder reaction conditions than the hydrogel of comparative example 1, since the highly exothermic reaction step of an addition of an amine to Al(H₂PO₄)₃, which is performed when preparing hydrogels of the prior art such as in case of comparative example 1, can be avoided when preparing the hydrogels according to the present invention. Since at the time of the addition of the amine in case of the preparation of the hydrogels according to the present invention, there is no aluminum yet present in the reaction mixture, there is also no undesired gelation occurring at this time of the reaction, which would result from an undesired high temperature increase occurring in case aluminum was present.

## Claims

1. A hydrogel obtainable by a method comprising at least three steps, namely steps 1), 2) and 3),
1) reacting, in an aqueous medium, at least one constituent a1) comprising at least one phosphorous containing functional group with at least one constituent a2) comprising at least one amino group that it is reactive towards the at least one phosphorous containing functional group of constituent a1) to form a phosphorous containing intermediate product IP1,
2) adding at least one of at least one kind of (i) aluminum oxide hydroxide particles, at least one kind of (ii) aluminum oxide particles, and at least one kind of (iii) at least one aluminum containing precursor for generating the at least one kind of particles (i) and/or (ii) as constituent a3) to the aqueous mixture containing the intermediate product IP1 obtainable after having performed step 1) to form a phosphorous and aluminum containing intermediate product IP2, and
3) curing the aqueous mixture containing the intermediate product IP2 obtainable after having performed step 2) to form the hydrogel.

2. The hydrogel according to claim 1, **characterized in that** it has an aluminum content, calculated as element and based on the total weight of the hydrogel, in a range of from 1.0 to 10.0 wt.-%, preferably of from 1.5 to 9.5 wt.-%, more preferably of from 2.0 to 9.0 wt.-%, even more preferably of from 2.5 to 8.5 wt.-%, still more preferably of from 3.0 to 8.0 wt.-%, yet more preferably of from 3.5 or of from >3.5 to 7.5 wt.-%, most preferably of from 4.0 to 7.5 or to 7.0 wt.-%.

3. The hydrogel according to claim 1 or 2, **characterized in that** it has a pH value in a range of from 4.0 to 7.0, preferably of from 4.1 to 6.5 or to 6.2, more preferably of from 4.2 to 5.9, even more preferably of from 4.3 to 5.8, still more preferably of from 4.4 to 5.7, yet more preferably of from 4.5 to 5.6, most preferably of from 4.6 to 5.4 or to 5.2.

4. The hydrogel according to one or more of the preceding claims, **characterized in that** it has a solid content in a range of from 35.0 to 80.0 wt.-%, preferably of from 40.0 or 45.0 to 77.5 wt.-%, more preferably of from 50.0 to 75.0 wt.-%, even more preferably of from 55.0 to 70.0 wt.-%.

5. The hydrogel according to one or more of the preceding claims, **characterized in that** it has a melting temperature range, which is less than 100 °C, preferably less than 90 °C, more preferably less than 80 °C, below its foaming temperature.

6. The hydrogel according to one or more of the preceding claims, **characterized in that** constituents a1) and a2) are reacted with each other in step 1) such that the molar ratio of nitrogen of the amino group(s) of constituent a2), calculated as element, to phosphorous present in constituent a1), calculated as element, is in a range of from 1.10:0.75 to 1.10:1.30, preferably of from 1.00:0.80 to 1.00:1.20, more preferably of from 1.00:0.90 to 1.00:1.10, even more preferably of from 1.00:1.00.

7. The hydrogel according to one or more of the preceding claims, **characterized in that** intermediate product IP1 and constituent a3) are reacted with each other in step 2) such that the molar ratio of phosphorous present in intermediate product IP1, calculated as element, to aluminum present in constituent a3), calculated as element, is in a range of from 5:1 to 1:1 or to 1.1:1, preferably of from 4:1 to 1.2:1, more preferably of from 3:1 or <3:1 to 1.3:1, even more preferably of from 2.8:1 to 1.4:1, yet more preferably of from 2.5:1 to 1.5:1, most preferably of from 2.3:1 to 1.6:1.

8. The hydrogel according to one or more of the preceding claims, **characterized in that** at least one kind of (i) aluminum oxide hydroxide particles, preferably at least one kind of boehmite particles, is used as constituent a3) in step 2), which preferably have been surface treated prior to its use as constituent a3) in step 2) with at least one acid, more preferably with at least one inorganic acid, even more preferably with nitric acid.

9. The hydrogel according to one or more of the preceding claims, **characterized in that** the (i) aluminum oxide hydroxide particles and/or the (ii) aluminum oxide particles used as constituent a3) or having been generated from (iii) the aluminum containing precursor, preferably the (i) aluminum oxide hydroxide particles, in step 2)
have a crystallite size (120 x-ray plane) in a range from 1 nm to 20 nm, preferably of from 2 to 15 nm, more preferably of from 3 to 10 nm, even more preferably of from 4 to 8 nm, and/or
have a dispersed particle size in a range of from 5 nm to 100 nm, preferably of from 10 to 75 nm, more preferably of from 15 to 50 nm, still more preferably of from 20 to 35 nm or to 30 nm, and/or
have a d₅₀ average particle size in a range of from 10 to 250 µm, preferably of from 15 to 150 µm, more preferably of from 20 to 100 µm, even more preferably of from 25 to 75 µm, still more preferably of from 30 to 50 µm.

10. The hydrogel according to one or more of the preceding claims, **characterized in that** the at least one phosphorous containing functional group of constituent a1) is selected from phosphate groups including pyrophosphate and polyphosphate groups, phosphonate groups, phosphorous oxides, and mixtures thereof, whereas phosphate groups and phosphonate groups include corresponding phosphate salts and esters and corresponding phosphonate salts and esters thereof in each case, preferably wherein at least phosphoric acid is used as constituent a1), optionally together with at least one further constituent comprising at least one phosphorous containing functional group, which is different from phosphoric acid, or **in that** an aqueous solution of aluminum dihydrogen phosphate is used at least partially as constituent a1).

11. The hydrogel according to one or more of the preceding claims, **characterized in that** constituent a2) comprises at least one water-soluble amine, preferably at least one water-soluble organic amine, more preferably at least one water-soluble aliphatic organic amine, even more preferably at least one water-soluble aliphatic organic amine having at most 6 carbon atoms, still more preferably at most 4 or 3 carbon atoms, and optionally having at least one OH-group besides the at least one amino group.

12. The hydrogel according to one or more of the preceding claims, **characterized in that** in step 2) at least one further constituent, which is different from constituent a3), is added to the aqueous mixture containing the intermediate product IP1 obtainable after having performed step 1) besides constituent a3), wherein said at least one further constituent is added prior to constituent a3), together with constituent 3) or after constituent a3) to the aqueous mixture containing the intermediate product IP1 and wherein said at least one further constituent is selected from constituents a4), a5) and a6), which are different from one another, wherein constituent a4) comprises preferably surface modified silica particles, wherein constituent a5) comprises at least one titanate and/or zirconate, and wherein constituent a6) comprises at least one organic additive, which preferably comprises at least one functional group selected from OH-groups, carboxyl groups, amino groups, and mixtures thereof.

13. A method for preparing a hydrogel according to one or more of the preceding claims, **characterized in that** it is obtainable by the method comprising the at least three steps 1), 2) and 3) defined in claim 1.

14. A use of the hydrogel according to one or more of claims 1 to 12 as fireproofing gel and/or for fire protection, in particular in glazing applications.

15. A substrate having at least one surface, onto which the hydrogel according to one or more of claims 1 to 12 has been at least partially applied, wherein the surface of the substrate preferably is a glass or thermoplastic surface.
